# EUROPEAN PATENT SPECIFICATION

(11) **EP 4 326 925 B1**
(45) Date of publication and mention of the grant of the patent: **21.08.2024**
(21) Application number: 23705629.6
(22) Date of filing: 03.02.2023
(51) Int. Cl.: C25B 1/04, C25B 9/23, C25B 11/052, C25B 11/065, C25B 11/075, C25B 11/081, C25B 13/02, C25B 13/08

(54) **CATALYST COATED MEMBRANES FOR WATER ELECTROLYSERS**
KATALYSATORBESCHICHTETE MEMBRANEN FÜR WASSERELEKTROLYSEURE
MEMBRANES REVÊTUES DE CATALYSEUR POUR ÉLECTROLYSEURS D'EAU

(30) Priority: 04.02.2022 GB 202201432; 04.02.2022 GB 202201437; 04.02.2022 GB 202201438; 04.02.2022 GB 202201434; 04.02.2022 GB 202201435
(43) Date of publication of application: 28.02.2024
(73) Proprietor: Johnson Matthey Hydrogen Technologies Limited, London EC4A 4AB (GB)
(72) Inventor: GONZALEZ HERRERA, Monica, Reading, Berkshire RG4 9NH (GB); ZALITIS, Chris, Reading, Berkshire RG4 9NH (GB)
(74) Representative: Johnson Matthey Plc
(86) International application number: PCT/GB2023/050241
(87) International publication number: WO 2023/148498

(56) References cited:
- WO-A1-2018/115821
- WO-A1-2020/148545
- US-A1- 2006 065 522
- US-A1- 2021 135 242
- US-A1- 2021 202 971
- US-B1- 6 183 668

## Description

### Field

The present specification relates to catalyst coated proton exchange membranes for green hydrogen producing water electrolysers including components thereof and methods of manufacture.

### Background

During water hydrolysis, hydrogen is produced at the cathode of the electrochemical cell while oxygen is produced at the anode. If the electrochemical cell is powered by a renewable electricity supply, the hydrogen produced in this manner is known as green hydrogen.

In practice, there are several different types of electrolyser configuration which can be used to produce green hydrogen. Electrolysis of water to produce high purity hydrogen and oxygen can be carried out in both alkaline and acidic electrolyte systems and practical devices using both types of electrolyte systems exist as commercial products. Those electrolysers that are acid electrolyte-based typically employ a solid proton-conducting polymer electrolyte membrane or proton exchange membrane (PEM) and are known as polymer electrolyte membrane water electrolysers or proton exchange membrane water electrolysers (PEMWEs). A catalyst-coated membrane (CCM) may be employed within the cell of a PEMWE, which comprises the proton exchange coated on one side by a cathode catalyst for catalysing a hydrogen evolution reaction and coated on the other side by an anode catalyst for catalysing an oxygen evolution reaction. Typically, for PEMWEs, cathode catalyst materials comprise platinum. Anode catalysts typically comprise iridium or iridium oxide (IrOx) materials or oxides containing both iridium and ruthenium.

Additional layers are added either side of a CCM to make an assembly, sometimes referred to as a membrane electrode assembly (MEA). These additional layers may include a porous transport layer (PTL) on the anode side and a gas diffusion layer (GDL) on the cathode side of the CCM. These layers may or may not be directly attached to the CCM. Other components may include bipolar plates and current collector plates. Stacks of such assemblies make up a PEMWE system including power and control systems. Further hardware is required to make a stack including cell frames, seals, and compression plates. Multiple stacks make up the PEMWE system which also includes thermal and fluid management, system controls, a power supply, and a hydrogen conditioning system.

Precious metals such as Pt and Ir are required for the electrodes, these metals being used to fabricate the electrode catalysts. The chemical and physical form of the metal and any support material which make up the catalysts can affect the amount of precious metal which is required and the performance characteristics of the catalyst in a water electrolyser application. Proton exchange membranes formed from ionomer are coated with catalyst layers to form catalyst coated membranes (CCM). Catalysts can be formulated into inks and deposited on a membrane to form a CCM or transferred to the membrane from a decal. The ink formulation and/or form of catalyst layer can affect functional performance. For example, the catalyst ink may contain ionomer or PTFE (polytetrafluoroethylene) or other fluoropolymer or polymer, which act as a binder for the catalyst when the layer is dried. If the catalyst is bound with ionomer, the ionomer additionally acts as an ion (proton) conducting medium to move protons towards (cathode) or away from (anode) the active sites on the electrocatalysts' surface.

One problem with existing water electrolyser systems is that iridium is a key component in their manufacture, yet a limited amount of iridium is available in the world and is expensive. Iridium, or more specifically iridium oxide materials (IrOx) are used as the anode catalyst in hydrogen producing PEM water electrolysers. Iridium oxide materials are particularly advantageous in terms of having sufficient activity to catalyse the required oxygen evolution reaction yet sufficient stability to survive the harsh acidic and oxidising environment to which they are subjected in a PEM water electrolyser. However, due to the scarcity of iridium, there is a need to develop proton exchange membrane water electrolyser systems which provide a significant increase in gigawatt (GW) power per kilogram (kg) of iridium (or conversely a decrease in the amount of iridium per unit power - kg_{Ir} / GW). Accordingly, improvements in the electrolyser systems, and in particular the catalyst coated membranes of such systems, are required.

In an electrolyser, the cathode is also known as the hydrogen electrode and is the electrode at which hydrogen is generated. The anode is also known as the oxygen electrode and is the electrode at which oxygen is generated. The result of any excessive crossover of hydrogen is a combination of molecular H₂ and molecular O₂ at the anode side, which is a potentially explosive mixture presenting a significant safety hazard, due to the wide explosive range of 5 - 95% H₂ in O₂. As such, although for efficient operation and maximum performance of a PEMWE it is important to keep the electronic and ionic resistances within the CCM as low as possible, it is also important to minimise any hydrogen crossover through the membrane into the oxygen stream. Traditionally, membranes have been 125 microns or thicker because of the need to limit such hydrogen crossover. However, the use of thicker membranes increases electronic and ionic resistances within the CCM. Since hydrogen crossover is exacerbated by the use of thinner membranes in PEMWEs it is quite typical to employ membranes with thicknesses of over 125 µm, and typically close to 200µm, or thicker.

Thus, although improved performance would be obtained by the use of a thinner PEM in PEMWEs, in practice this has not been possible because of the increased hydrogen crossover and the resultant safety risk. Traditionally, PEM thicknesses in PEMWEs are 125 µm or greater to reduce the level of hydrogen crossover, but the concomitant increase in ionic resistance severely limits PEMWE performance. Examples of currently used membranes include Nafion^{™} N115 (thickness 125 µm) and Nafion^{™} N117 (thickness 175 µm).

There is thus a need for a high-performance PEM which limits hydrogen crossover to reduce the safety risk in hydrogen producing water electrolyser applications, yet has lower ionic resistance by, for example, being of lower thickness or higher conductivity than the conventional, currently used membranes. By "high performance" is meant that the PEMWE can operate at as high a current density as possible, with as high an electrical efficiency (i.e., low cell voltage) as possible.

Johnson Matthey have previously filed a patent application (published as WO2018/115821) directed to addressing the aforementioned need. WO2018/115821 describes the manufacture of a CCM for PEM water electrolysers by laminating three membranes together: a first membrane coated with a cathode catalyst layer (a hydrogen evolution reaction or HER catalyst such as platinum black in a dispersion of ionomer); a second membrane coated with an anode catalyst layer (an oxygen evolution reaction or OER catalyst such as IrO₂ black in a dispersion of ionomer); and a third membrane coated with a recombination catalyst (such as palladium supported on carbon black in a solution of ionomer) to reduce hydrogen cross-over, the third membrane being sandwiched between the first and second membranes.

An advantage of the lamination method described in WO2018/115821 is that it can utilise very thin membrane components and the resulting CCM is also thin.

In the examples disclosed in WO2018/115821, each of the three membranes was a 17 µm thick membrane and comprised a 900 EW Flemion^{™} ionomer from Asahi Glass Group with a PTFE reinforcement. A ceria hydrogen peroxide scavenger catalyst was coated on one side of each of the three membranes. A cathode catalyst layer comprising Pt black in a dispersion of ionomer was coated onto one of the membrane components over the ceria layer, an anode catalyst layer comprising IrO₂ black in a solution of ionomer was coated onto another of the membrane components over the ceria layer, and a recombination catalyst comprising Pd supported on carbon black in a solution of ionomer was deposited onto the final membrane component over the ceria layer. The three catalyst-coated membrane components were then arranged with the membrane component having the recombination catalyst layer in the middle, sandwiched between the other two membrane components with the anode and cathode catalyst layers facing outwards. The central membrane component was oriented such that the recombination catalyst layer faced the membrane component which carried the anode catalyst layer. These three layers were then laminated to form a CCM.

While the lamination method described in WO2018/115821 may produce a CCM with low levels of defects compared to conventional lamination methods, the method still produces a CCM having two lamination interfaces between the polymer membranes and does not entirely avoid the problems associated with lamination.

There is still a need for alternative, improved, membranes, and corresponding CCMs, which satisfy one or more, preferably all, of the following properties:
good balance between strength and high conductivity;
low, or at least acceptable, H₂ crossover levels; and
free, or at least substantially free, from interfacial defects.

There is also a need to:
select or develop suitable catalyst materials for use in such CCMs;
develop improved catalyst ink formulations and methods of deposition to fabricate improved catalyst layers; and
provide optimized levels and distributions of other additives such as radical scavengers.

The present specification is aimed at addressing these needs.

### Summary

Catalyst coated membranes (CCMs) for water electrolysers as described in this specification are manufactured by a method comprising: forming an ionomer membrane having a first surface and a second surface, the ionomer membrane comprising reinforcement material; forming an anode catalyst layer on the first surface of the ionomer membrane; and forming a cathode catalyst layer on the second surface of the ionomer membrane, wherein the reinforcement material is distributed asymmetrically relative to a central plane of the ionomer membrane such that its average location is closer to the anode catalyst layer than the cathode catalyst layer.

The ionomer membrane can be formed by a multi-layer method comprising: depositing a dispersion of ionomer in liquid carrier onto a solid backing layer and at least partially drying to form a first ionomer layer; depositing a dispersion of ionomer in liquid carrier onto the first ionomer layer and at least partially drying to form a second ionomer layer over the first ionomer layer; and optionally sequentially depositing and drying one or more further layers of ionomer over the first and second ionomer layers to build up the ionomer membrane structure on the solid backing layer, wherein at least one of the ionomer layers comprises the reinforcement material.

In relation to the above, it has been found that it can be advantageous to distribute the reinforcement material asymmetrically such that its average location is closer to the anode catalyst layer than the cathode catalyst layer. For example, if a single reinforcement layer is provided within the ionomer membrane then it is located closer to the anode catalyst layer than the cathode catalyst layer. Alternatively, if two reinforcement layers are provided within the ionomer membrane then these are positioned such that the location of the mid-point between the two reinforcement layers is closer to the anode catalyst layer than the cathode catalyst layer.

One potential reason for this asymmetric configuration being advantageous is that it has been found to be very important for the CCM in water electrolyser applications to have a high-quality anode catalyst layer (more so than the cathode catalyst layer, although the quality of that layer is also of importance). Skewing the reinforcement towards the anode side has been found to be advantageous to ensure the best quality anode catalyst layer is fabricated and maintained during operation, the anode catalyst layer being critical to achieving better performance in water electrolyser applications.

Following the above methodology provides a catalyst coated membrane for a water electrolyser, the catalyst coated membrane comprising: an ionomer membrane having a first surface and a second surface; an anode catalyst layer on the first surface of the ionomer membrane; and a cathode catalyst layer on the second surface of the ionomer membrane, wherein the ionomer membrane comprises reinforcement material, and wherein the reinforcement material is distributed asymmetrically relative to a central plane of the ionomer membrane such that its average location is closer to the anode catalyst layer than the cathode catalyst layer.

If multiple deposition and drying steps are utilized to build up the ionomer membrane structure, the ionomer membrane can be formed by at least 3, 5, or 7 ionomer layers, no more than 15, 12, or 10 ionomer layers, or by a number of ionomer layers within a range defined by any combination of the aforementioned lower and upper limits. At least one, and optionally at least two, of the ionomer layers may comprise a reinforcement material in addition to the ionomer. The reinforcement material may comprise a porous reinforcement polymer layer which is impregnated with ionomer, the reinforcement material optionally being expanded polytetrafluoroethylene (ePTFE).

In addition to the asymmetry in the reinforcement distribution within the ionomer membrane such that it is skewed towards the anode side, another asymmetry arises in the quality of the surfaces of the ionomer membrane on which the catalyst layers are fabricated. In particular, it has been found that the side of the ionomer membrane formed by the interface with the backing layer (i.e., proximal to the backing layer) provides a better, lower defect, surface for subsequent deposition of the anode catalyst layer when compared to the side of the membrane which is distal to the backing layer (i.e., the surface formed by the final layer deposited to form the ionomer membrane). As previously stated, it has been found to be very important for the CCM in water electrolyser applications to have a high-quality anode catalyst layer. As such, it is the anode catalyst layer rather than the cathode catalyst layer which should be formed on this better surface-quality side of the ionomer membrane. This is especially the case when the ionomer membrane is built-up to a target thickness via multiple deposition and drying steps which can lead to defects building up in the top surface of the ionomer membrane. Furthermore, the inclusion of additives into the membrane during fabrication, such as reinforcement materials and radical reducing agents, can also contribute to defects forming in the top surface of the ionomer membrane. As such, when fabricating such a multi-layer composite ionomer membrane, the use of the lower defect external surface formed proximal to the backing layer as the substrate surface for the anode catalyst layer is especially important.

Further still, yet another advantageous asymmetry in the CCM structure relates to the type of ionomer used in the ionomer membrane, the cathode catalyst layer, and the anode catalyst layers. Advantageously, the ionomer of the anode catalyst layer differs from the ionomer in the membrane in that it has one or more of: a higher equivalent weight than the membrane ionomer; longer side chains than the membrane ionomer; and/or different chemical groups in the side chains compared to the membrane ionomer. In contrast, the ionomer used in the cathode catalyst layer can be the same or similar to that used in the ionomer membrane. Examples of the different ionomers for use in the different layers are provided later in this specification. However, as a general point it is noted that this is another example of a surprisingly advantageous asymmetry in the catalyst coated membranes described herein.

Most advantageously, the aforementioned asymmetries are combined to provide an optimized CCM for green hydrogen producing water electrolysers which has: (i) reinforcement skewed towards the anode side; (ii) a better-quality interface between the ionomer membrane and the catalyst layer on the anode side; and (iii) a different ionomer in the anode catalyst layer.

While certain aspect of the present specification has been summarized above, it should be noted that various aspects of catalyst coated membranes and components thereof are described in this specification including aspects of the ionomer membrane including reinforcement layers, aspects of the anode and cathode catalyst layers, aspects of the catalysts disposed in the catalyst layers, aspects of the inks used to fabricate the catalyst layers, and aspects relating to methods of fabrication. The present specification is intended to provide basis for claiming these different aspects, and features thereof, individually or in any combination.

### Brief Description of the Drawings

For a better understanding of the present invention and to show how the same may be carried into effect, certain embodiments of the present invention will now be described by way of example only with reference to the accompanying drawings, in which:
Figure 1 illustrates an example of method steps involved in fabricating a proton exchange membrane comprising two reinforcement layers;
Figure 2 illustrates schematic example of a CCM structure comprising a proton exchange membrane comprising two reinforcement layers;
Figure 3 shows a micrograph of a cross-section of a proton exchange membrane comprising two reinforcement layers;
Figure 4 shows performance data for a membrane according to an embodiment of this specification verses a commercial Nafion^{™} 115 membrane illustrating an improvement in performance in terms of increased current density at a given voltage;
Figure 5 shows that the optimisation of ionomer concentration can lead to an improvement in performance of a CCM for PEMWE; and
Figure 6 shows an improvement in CCM performance achieved by a modification to the cathode catalyst layer.

### Detailed Description of the Invention

As described in the background section with reference to the summary section, the present specification is concerned with providing catalyst coated proton exchange membranes, and components thereof, for water electrolysers.

Key focus areas to achieve improvements in CCM performance include: (A) improvements in the anode catalyst layer such as reducing the iridium content while maintaining functional performance balancing activity and stability; (B) improvements in the proton exchange membrane such as reducing the thickness of the membrane to increase the rate of proton exchange while including additives to retain mechanical stability, mitigate against hydrogen cross-over, and/or reduce radical concentration to improve chemical stability and lifetime; and (C) improvements in the cathode catalyst layer such as reducing the platinum content while maintaining functional performance.

The present specification addresses each of these three areas. Improvements in the proton exchange membrane and overall CCM structure will be discussed first, followed by improvements in the anode catalyst layer and then improvements in the cathode catalyst layer.

### Proton Exchange Membrane

One aspect of the present specification is particularly directed towards improvements in the proton exchange membrane configuration including reducing the thickness of the membrane to reduce its protonic resistance while including additives to retain mechanical stability, mitigate against hydrogen cross-over, reduce defects introduced during manufacture (particularly at interfaces between sublayers of the membrane), and improve chemical stability and lifetime.

A membrane in a PEMWE is required to allow protons to move between anode and cathode easily (low resistance) while stopping gas (especially H₂) crossover. A thinner membrane has less ionomer to pass through and therefore has a lower resistance for proton transfer but allows increased gas crossover. Therefore, the thickness of the membrane is often chosen to balance the resistance with the crossover, with the most popular being Nafion^{™} 115 and 117 from Chemours^{™} at 125 and 175 µm thick, respectively.

In fuel cells, which use thinner membranes, reinforcement has shown to extend the working life of a CCM by constraining the ionomer against swelling, preventing pinholes or cracks from forming. This has been found to carry over to electrolysers. However, the above mentioned N115 and N117 do not contain reinforcement. A Nafion^{™} 212 membrane, which is cast, can contain reinforcement but is currently considered too thin for electrolyser operation (too much hydrogen crossover). There is no commercial membrane within a gap between 50 and 125 µm which appears to be optimal for certain PEM water electrolyser applications. Therefore, a membrane within this gap with reinforcement would be highly beneficial for electrolyser operation. An ideal membrane would also introduce H₂O₂ scavenging catalyst(s) to protect against radical degradation and recombination catalysts.

A catalyst coated membrane configuration according to one aspect of the present specification differs in a number of respects from that described in WO2018/115821.

Suitably, the ionomer membrane component of the catalyst coated membrane is formed of a single, coherent, non-laminated polymer film and contains one polymer membrane rather than three. The polymer film may conveniently be prepared by sequentially printing, spraying, or coating multiple layers in a fluid deposition process, wherein the layers become consolidated during drying. At least one of the deposited layers is provided with a reinforcement polymer.

The single-layer, reinforced polymer membrane has a high degree of rigidity making it easier to process to form the catalyst coated membrane, and can be used, for example, as a substrate for deposition, either directly or via a decal, of both the cathode catalyst layer (on one side) and the anode catalyst layer (on the other side).

While the earlier WO2018/115821 patent application discussed the benefits of processing three separate membranes such that each membrane only needs to be coated with a single catalyst layer, the present specification provides an alternative approach by providing a multi-layer, reinforced polymer membrane which is more readily processed for deposition of catalyst layers on either side thereof while avoiding lamination interfaces within the membrane which is advantageous for the reasons given below.

Lamination of proton conductive membranes comprises pressing and/or bonding at least two solid proton conductive membranes together. A lamination interface is formed between the two membranes where solid surfaces of the individual membranes are pressed and/or bonded together. Lamination interfaces comprise physical defects. Furthermore, the structural and/or chemical nature of a lamination interface also differs from that of the bulk polymer material. This is because when a solid membrane is formed, the outer surfaces of the solid membrane have surface features which are distinct from those in the bulk material. For example, a hydrophobic skin forms on a surface of a membrane at an air interface. Raman spectroscopy can detect this difference. As such, when two solid membranes are pressed together, the lamination interface formed by the two solid surfaces is distinctive in chemical and/or structural form compared to the bulk of the proton conductive polymer material. Microscopy and spectroscopy techniques can thus distinguish between lamination interfaces between layers of proton conductive polymer and interfaces which have been formed via a liquid phase deposition process such as printing, spraying, or coating of layers to build up a multi-layer structure. That is, a non-laminated interface is structurally and/or chemically distinct from a laminated interface and is not just a feature of the manufacturing method. Furthermore, a non-laminated interface can be identified as being non-laminated in a product CCM without prior knowledge of the manufacturing method. Examples of analysis techniques for detecting a laminated interface include cross-section SEM. Variations of crystallinity at interfaces can be detected using cross-section TEM. Other techniques for detecting laminated interfaces include 13C/1H/19F solid state NMR, neutron diffraction, and/or a combination of two or more of the aforementioned techniques.

Due to physical defects and/or chemical variations at lamination interfaces between proton conductive polymer membranes, such interfaces can increase the resistance of a multi-layer proton conductive membrane. As such, it has been found to be advantageous to fabricate a multi-layer proton conductive membrane by depositing layers of ionomer dispersed in a liquid solvent to build up a multi-layer membrane structure rather than via lamination of individual solid layers/membranes of proton conductive polymer.

Accordingly, the membrane of the present specification is suitably made by casting, i.e., depositing multiple layers of proton conductive polymer on top of each other via a liquid phase deposition process such as printing, spraying, or coating. This is unusual for membranes used in electrolyser CCMs which are typically extruded or alternatively laminated together as in WO2018/115821. A coherent non-laminated polymer film is thus made up by a plurality of proton conducting polymer layers, at least one of the layers comprising a porous reinforcement polymer impregnated with ionomer.

The individual layers may be formed by preparing a dispersion of ionomer in a liquid phase solvent and then depositing the dispersion to form a layer of ionomer. The layer thus formed can be dried, or at least partially dried, prior to deposition of a further layer of ionomer thereover. Depositing multiple thin layers in this manner is preferable to depositing one or several thicker layers as it is easier to dry a thin layer, removing liquid solvent from the layer, when compared to deposition and drying of a thicker layer. The physical, chemical, and electronic properties of a resultant membrane can be compromised if significant quantities of solvent remain trapped in the multi-layer structure. Alternatively, fabrication times are significantly increased if it is required to dry the membrane structure for extended periods to remove solvent from thick layers of deposited ionomer dispersion.

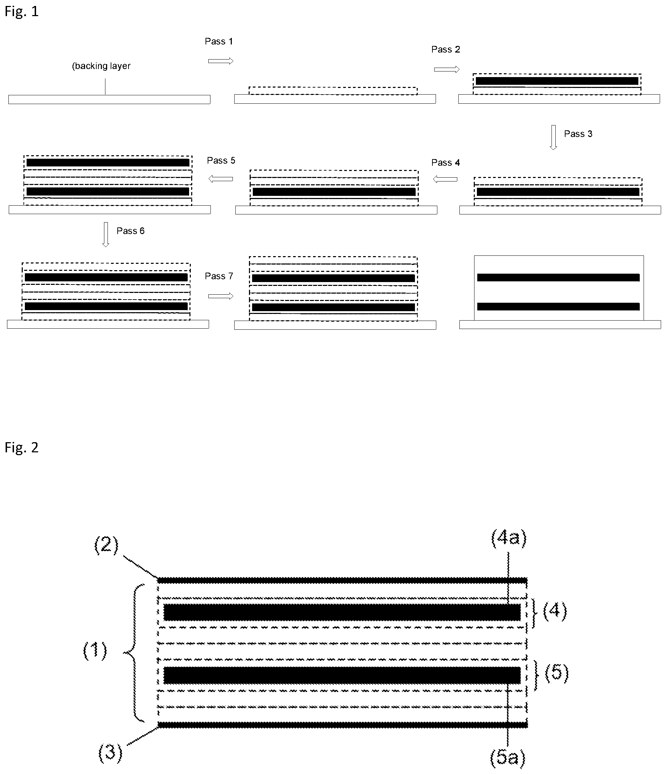

An example of sequential printing of layers is shown in Figure 1. In the first pass a proton conducting polymer layer is applied onto a backing layer. The proton conducting polymer layer is then dried. In the second pass an anode-side reinforcement layer is applied onto conducting polymer layer. The anode-side reinforcement layer is then dried. This sequence of application and drying is continued to produce proton conducting polymer layers during passes 3, 4, 6 and 7. A cathode-side reinforcement layer is applied during pass 5.

The resulting membrane is referred to herein as "coherent", meaning that it is free from internal lamination interfaces. While the illustration in Figure 1 shows dashed lines between the individual printed layers, these are for illustration purposes only and are not discernible in the final product. A schematic cross-section of the membrane formed after pass 7 is shown in the bottom right corner of Figure 1.

Typically, the individual proton conducting polymer layers which together make up the single coherent non-laminated polymer film have a thickness of 6-12 µm, such as 7-11 µm.

Typically, the anode-side and cathode-side reinforcement layers each have a thickness of 14-22 µm, such as 16-20 µm.

For the avoidance of doubt, these thicknesses refer to the thickness of the layer formed after drying of the layer and before application of the next layer. The thickness of the wet layer needed to get the required thickness of dry layer can be determined empirically. The membrane (made up from the individual proton conducting polymer layers, the anode-side reinforcement layer and the cathode-side reinforcement layer) may have, for example, an overall thickness of 75-85 µm.

The membrane fabricated as illustrated in Figure 1 includes an anode-side reinforcement layer and a cathode-side reinforcement layer. The membrane terms "anode-side" and "cathode-side" are to be understood as the sides of the membrane at which it is intended to apply an anode catalyst and a cathode catalyst, respectively. The reinforcement may be formed of expanded polytetrafluoroethylene (ePTFE) or polybenzimidazole (PBI) while the proton conducting polymer layers may be formed of perfluorosulfonic acid (PFSA) polymer.

Alternatively, the membrane fabrication process illustrated in Figure 1 can be terminated after pass 4 resulting in a thinner membrane product with a single reinforcement layer located closer to the anode side of the membrane. The membrane product thus has a layer structure: 1. proton conducting polymer layer; 2. reinforcement layer; 3. proton conducting polymer layer; 4. proton conducting polymer layer. In this configuration, the membrane (made up from the individual proton conducting polymer layers and the anode-side reinforcement layer) may have, for example, an overall thickness of 45-55 µm.

In relation to the above, it should be noted that the "anode-side" of the membrane is the side of the membrane which is adjacent the backing layer during fabrication. That is, the anode side is formed by the first proton conducting layer deposited on the backing layer during the multilayer, fluid deposition process illustrated in Figure 1. It has been found that the side of the membrane formed by the interface with the backing layer (i.e., proximal to the backing layer) provides a better surface for subsequent deposition of the anode catalyst layer when compared to the side of the membrane which is distal to the backing layer (i.e., the surface formed by the final layer deposited to form the membrane). Furthermore, it has been found to be important for the CCM in water electrolyser applications to have a high-quality anode catalyst layer (more so than the cathode catalyst layer, although the quality of that layer is also of importance). As such, it is the anode catalyst layer rather than the cathode catalyst layer which should preferably be formed on this better surface quality side of the membrane.

Another point to note is that the reinforcement layers in the previously discussed examples are not located at the outer surface of the membrane and they are not located centrally and/or symmetrically relative to the central plane of the membrane. For example, in the 4-coating-pass example previously discussed, which incorporates a single reinforcement layer, that reinforcement layer (deposited in the 2^{nd} coating pass) is located closer to the anode side of the membrane than the cathode side of the membrane. In the 7-coating-pass example previously discussed (and illustrated in Figure 1), which incorporates two reinforcement layers, the first reinforcement layer (deposited in the 2^{nd} coating pass) is located closer to the anode side of the membrane than to the central plane of the membrane, and the second reinforcement layer (deposited in the 5^{th} coating pass) is located closer to the central plane of the membrane than to the cathode side of the membrane. In each case, the reinforcement is skewed or shifted towards the anode side of the membrane compared to a symmetric arrangement relative to the central plane of the membrane. Counter-intuitively, this asymmetry may be advantageous for CCMs in water electrolyser applications, perhaps due to the asymmetry in the operating environment of the CCMs in water electrolyser applications. It has been found that the membranes fabricated using this approach have beneficial mechanical and creep properties when compared to other commercial electrolyser membranes such as Nafion^{™} 115. The membranes also behave asymmetrically in a machine direction versus a transverse direction and the reinforcement decreases swelling of the membrane in use, particularly in the x,y plane of the membrane. In this regard, if the membrane is manufactured using a roll-to-roll process, there are two directions - the machine direction, which is the long direction corresponding to the direction of travel of the printed material, and the transverse direction, which is the-side-to-side direction across the printed membrane strip. It has been found that there are some asymmetric properties associated with the manufacturing process, which have been observed in mechanical properties such as creep. One source of asymmetry arises from the ePTFE, which is stronger in one direction than the other, and something not seen in unreinforced membranes such as N115.

It is also important to note that the reinforcement layer(s) must be conductive to protons. As typical reinforcement polymer materials are not conductive to protons, or not sufficiently conductive to protons, the reinforcement layer is thus formed using a porous reinforcement polymer which is impregnated with ionomer through the pores of the material to provide proton conductive paths from one side of the layer to the other side of the layer. The porosity of the reinforcement polymer, thickness, strength, and the methodology used to ensure good impregnation of the pores with ionomer, are important to achieve the desired combination of mechanical and conductivity requirements for the reinforcement layer and also drying characteristics to ensure that solvent is removed during fabrication. For example, advantageously the reinforcement layers each have a thickness which is between 1.5 and 2.5 times the thickness of the non-reinforced proton conducting polymer layers. Furthermore, each reinforcement layer comprises between 7 and 15 wt% of the porous polymer reinforcement material relative to a total weight of ionomer and porous polymer reinforcement material in the reinforcement layer. For example, the reinforcement layer may have a concentration of reinforcement material (e.g., ePTFE) of 4.7g/m² and a concentration of ionomer of 36g/m². Therefore reinforcement material contributes 100 × 4.7/(4.7+36) = 11.5 wt%. In this regard, it should be noted that although the reinforcement layer is the order of twice as thick as the other non-reinforced proton conducting polymer layers, a significant volume of the layer is occupied by reinforcement polymer. As such, the ionomer dispersion loading for the layer remains similar to that of the other non-reinforced layers. Balancing thickness and loadings of reinforcement and ionomer for the reinforcement layer in this manner provides a good combination of mechanical strength, conductivity, drying, and layer forming characteristics. The greater thickness aids in accommodating the reinforcement. A key feature from a technology point of view is getting good impregnation of ionomer into the porous reinforcement material. Otherwise, there will be holes, cavities or voids introducing locations where there is no ionomer and so no conduction. One method for achieving this, in addition to selecting suitable materials and weight ratios for the ionomer and reinforcement material, is to deposit a wet layer of ionomer dispersion of sufficient thickness and then apply tension to a porous reinforcement material as it is brought down into the wet layer of ionomer dispersion. This layer is than dried to give the reinforced layer. An example of a suitable reinforcement polymer is expanded polytetrafluoroethylene (ePTFE).

The nature of the porous reinforcement polymer, its location in the membrane, and the method of depositing and impregnating with ionomer are all important to obtain improved mechanical characteristics for the membrane while also simultaneously achieving reduced protonic resistance.

In addition to the reinforcement polymer, the ionomer itself provides structural/mechanical integrity to the membrane as well as conductive properties and it is important to select a suitable ionomer and method of deposition in order to achieve a desired combination of conductivity and mechanical integrity. The ionomer may be a perfluorosulphonic acid ("PFSA") and may have an equivalent weight selected from: greater than 750EW, 770EW, or 790EW; less than 850EW, 830EW, or 810EW; or within a range defined by any combination of the aforementioned lower and upper limits.

An ionomer dispersion is formed comprising the ionomer dispersed in a solvent. The solvent may be a mixture of an organic solvent and water. For example, the solvent may be a mixture of an alcohol (e.g. ethanol or propanol) and water. The volume ratio of organic solvent to water may be: at least 60 : 40, 70 : 30, or 75 : 25; no more than 95 : 5; 90 : 10, or 85 : 15; or within a range defined by any combination of the aforementioned lower and upper limits. The solvent is formulated for achieving the desired dispersion, coating, and drying characteristics.

The ionomer may be provided in the dispersion at a weight percentage of: at least 7 wt%, 10 wt%, 14 wt%, or 16 wt%; no more than 22 wt%, 20 wt%, or 18 wt%; or within a range defined by any combination of the aforementioned lower and upper limits. The ionomer content is selected for achieving the desired dispersion, coating, and drying characteristics.

The ionomer dispersion may also comprise a radical reducing additive (e.g., a peroxide radical reducing additive such as ceria). For example, the radical reducing additive may be provided in the dispersion at a weight percentage, relative to the weight of ionomer, of: at least 0.15 wt%, 0.20 wt%, or 0.23 wt%; no more than 0.35 wt%, 0.30 wt%, or 0.28 wt%; or within a range defined by any combination of the aforementioned lower and upper limits. The radical reducing agent may be dispersed within one or more of the proton-conducting polymer layers and/or the reinforcement layers. In certain examples, the same ionomer dispersion composition is used in all layers. It will be noted that peroxide can decompose to form a range of radicals (O, OH, OOH) and the radical reducing additive may reduce the amount of one, more, or all of these radicals.

### Catalyst Coated Membrane

A catalyst coated membrane is prepared by applying an anode catalyst layer to the anode side of the membrane and a cathode catalyst layer to the cathode side of the membrane. An example of a catalyst coated membrane is illustrated in Figure 2. The CCM configuration shown in Figure 2 comprises a membrane structure as formed using the method of Figure 1. In the illustration, membrane 1 has an anode catalyst layer 2 on one side thereof and a cathode catalyst layer 3 on an opposite side thereof. Dashed lines indicate the ionomer layers deposited as shown in Figure 1. Layers 4 and 5 are reinforcement layers comprising reinforcement polymer 4a and 5a respectively. As shown in Figure 2, the reinforcement polymer has a thickness which is less than the thickness of the reinforcement layer in which it is disposed. That is, the ionomer within the reinforcement layer impregnates and surrounds the reinforcement polymer material.

As previously stated, the anode catalyst layer is applied to the side of the membrane which was adjacent (proximal) the backing layer during the membrane fabrication process. This is the better-quality surface for fabricating the anode catalyst layer thereon and it has been found to be critical for water electrolyser applications that the anode catalyst layer is well formed. Furthermore, the membrane is also oriented such that the reinforcement is off-set towards the anode side compared to a symmetric arrangement around the central plane of the membrane.

The specific type of catalysts for the cathode and anode can be varied. The cathode catalyst layer for catalysing the hydrogen evolution reaction may comprise platinum and/or the anode catalyst layer for catalysing the oxygen evolution reaction may comprise iridium oxide or mixed oxides of iridium and another metal or metals. Various methods may be used to apply the anode and cathode catalyst layers. One method involves applying the catalyst layer as a decal. A typical procedure for providing a decal involves producing an ink comprising the catalyst, ionomer, organic solvent and water. The ink may be applied and bar coated onto a sheet of Teflon and dried to form a decal. The catalyst decals can be hot pressed with the membrane to form a CCM. As an alternative, the catalyst inks can be directly coated onto the membrane.

### Low Defect Surface for Anode Catalyst Layer

One feature of certain examples according to the present specification is focused on the finding that the surface of the membrane formed proximal to the backing layer on which it is manufactured is better suited for supporting the anode catalyst layer of a water electrolyser CCM. As previously described in the preceding section, this surface has fewer defects than the surface of the membrane which is distal to the backing layer on which it is manufactured. It has been found that in water electrolyser CCMs, it is preferred to use the lower defect surface for fabricating the anode catalyst layer thereon. As such, a catalyst coated membrane for a water electrolyser is provided, the catalyst coated membrane comprising: an ionomer membrane having a first surface and a second surface; an anode catalyst layer on the first surface of the ionomer membrane; and a cathode catalyst layer on the second surface of the ionomer membrane, wherein the first surface of the ionomer membrane has fewer defects than the second surface of the ionomer membrane.

By "fewer defects", we mean that the first surface may have one or more of: a higher surface flatness than the second surface; a lower surface roughness than the second surface; a lower level of particulate and/or chemical contamination than the second surface; and/or a lower number of cavities or voids than the second surface.

The ionomer membrane of the catalyst coated membrane may have a multilayer structure formed by: at least 3, 5, or 7 ionomer layers; no more than 15, 12, or 10 ionomer layers; or a number of ionomer layers within a range defined by any combination of the aforementioned lower and upper limits. At least one, and optionally at least two, of the ionomer layers may comprise a reinforcement material in addition to the ionomer. The reinforcement material may comprise a porous polymer layer which is impregnated with ionomer, the reinforcement material optionally being expanded polytetrafluoroethylene (ePTFE). Furthermore, as previously indicated, the reinforcement material can be distributed asymmetrically relative to a central plane of the ionomer membrane such that its average location is closer to the anode catalyst layer than the cathode catalyst layer. Further still, the ionomer membrane may also comprise a radical reducing additive, optionally ceria.

The anode catalyst layer may comprise an iridium containing catalyst material, optionally an iridium oxide containing catalyst material while the cathode catalyst layer may comprise a platinum-on-carbon catalyst material. One or both of the anode catalyst layer and the cathode catalyst layer may comprise both catalyst material and ionomer material, the catalyst material being dispersed in the ionomer material or vice versa. The ionomer in one or both of the anode catalyst layer and the cathode catalyst layer may be different to the ionomer in the ionomer membrane.

Also provided is a method of manufacturing a catalyst coated membrane for a water electrolyser as described above, the method comprising: depositing a dispersion of an ionomer in a liquid carrier onto a solid backing layer; drying the deposited dispersion to remove the liquid carrier and form an ionomer membrane disposed on the solid backing layer, the ionomer membrane having a first surface which is proximal to the solid backing layer and a second surface which is distal to the solid backing layer; forming an anode catalyst layer on the first surface of the ionomer membrane after removal of the ionomer membrane from the solid backing layer; and forming a cathode catalyst layer on the second surface of the ionomer membrane, wherein the cathode catalyst layer is formed on the second surface of the ionomer membrane either before or after removal of the ionomer membrane from the solid backing layer.

The ionomer membrane can be formed on the solid backing layer by multiple deposition and drying steps, the method comprising: depositing a dispersion of ionomer in liquid carrier onto the solid backing layer and at least partially drying to form a first ionomer layer; depositing a dispersion of ionomer in liquid carrier onto the first ionomer layer and at least partially drying to form a second ionomer layer over the first ionomer layer; and optionally sequentially depositing and drying one or more further layers of ionomer over the first and second ionomer layers to build up the ionomer membrane structure on the solid backing layer. The anode catalyst layer can be transferred onto the first surface of the ionomer membrane from a decal. Alternatively, the anode catalyst layer can be fabricated directly on the first surface of the ionomer membrane by a liquid deposition process.

### Asymmetric Distribution of Reinforcement Material

Another feature of certain examples according to the present specification is focused on the finding that providing an asymmetric distribution of reinforcement material within the ionomer membrane can be advantageous for water electrolyser CCM performance. Accordingly, a catalyst coated membrane for a water electrolyser is provided, the catalyst coated membrane comprising: an ionomer membrane having a first surface and a second surface; an anode catalyst layer on the first surface of the ionomer membrane; and a cathode catalyst layer on the second surface of the ionomer membrane, wherein the ionomer membrane comprises reinforcement material, and wherein the reinforcement material is distributed asymmetrically relative to a central plane of the ionomer membrane such that its average location is closer to the anode catalyst layer than the cathode catalyst layer.

Again, the ionomer membrane can be a multilayer structure formed by: at least 3, 5, or 7 ionomer layers; no more than 15, 12, or 10 ionomer layers; or a number of ionomer layers within a range defined by any combination of the aforementioned lower and upper limits. At least one, and optionally at least two, of the ionomer layers comprise a reinforcement material in addition to the ionomer. According to certain examples, only one of the ionomer layers comprises reinforcement material and said layer is closer to the anode catalyst layer than the cathode catalyst layer. Alternatively, according to another example two of the ionomer layers comprise reinforcement material and a mid-point between the two ionomer layers is closer to the anode catalyst layer than the cathode catalyst layer.

Other features of these examples are as previously described. Such catalyst coated membranes are manufactured by a method comprising: forming an ionomer membrane having a first surface and a second surface, the ionomer membrane comprising reinforcement material; forming an anode catalyst layer on the first surface of the ionomer membrane; and forming a cathode catalyst layer on the second surface of the ionomer membrane, wherein the reinforcement material is distributed asymmetrically relative to a central plane of the ionomer membrane such that its average location is closer to the anode catalyst layer than the cathode catalyst layer. As previously explained, the ionomer membrane can be formed by: depositing a dispersion of ionomer in liquid carrier onto a solid backing layer and at least partially drying to form a first ionomer layer; depositing a dispersion of ionomer in liquid carrier onto the first ionomer layer and at least partially drying to form a second ionomer layer over the first ionomer layer; and optionally sequentially depositing and drying one or more further layers of ionomer over the first and second ionomer layers to build up the ionomer membrane structure on the solid backing layer, wherein at least one of the ionomer layers comprises the reinforcement material. Advantageously, the anode catalyst layer is formed on an outer surface of the first ionomer layer after removal of the ionomer membrane from the solid backing layer.

### Reinforcement Layer Composition

Another feature of certain examples according to the present specification is focused on the composition and structure of the reinforcement layers in the CCM. Accordingly, there is provided a catalyst coated membrane for a water electrolyser, the catalyst coated membrane comprising: an ionomer membrane having a first surface and a second surface; an anode catalyst layer on the first surface of the ionomer membrane; and a cathode catalyst layer on the second surface of the ionomer membrane, wherein the ionomer membrane comprises at least one reinforcement layer, said reinforcement layer comprising a porous polymer reinforcement material (e.g., expanded polytetrafluoroethylene - ePTFE) which is impregnated with ionomer, wherein the or each reinforcement layer comprises between 5 and 20 wt%, optionally between 7 and 15 wt%, of the porous polymer reinforcement material relative to a total weight of ionomer and porous polymer reinforcement material in the reinforcement layer. Each reinforcement layer may have a thickness in a range 12 to 24 µm.

In addition to at least one reinforcement layer, the ionomer membrane may comprise at least one non-reinforced ionomer layer. Each non-reinforced ionomer layer may have a thickness in a range 6 to 12 µm. Advantageously, each reinforcement layer has a thickness which is between 1.5 and 2.5 times the thickness of each non-reinforced ionomer layer.

As described in previous examples, the ionomer membrane is a multilayer structure formed by: at least 3, 5, or 7 ionomer layers; no more than 15, 12, or 10 ionomer layers; or a number of ionomer layers within a range defined by any combination of the aforementioned lower and upper limits, and wherein at least one, and optionally at least two, of the ionomer layers comprises the porous polymer reinforcement material in addition to the ionomer. If only one of the ionomer layers comprises reinforcement material, said layer can be provided closer to the anode catalyst layer than the cathode catalyst layer. Alternatively, if two of the ionomer layers comprise reinforcement material, these can be located such that a mid-point between the two ionomer layers is closer to the anode catalyst layer than the cathode catalyst layer.

Other features of these examples are as previously described. The catalyst coated membrane is manufactured by a method comprising: forming an ionomer membrane having a first surface and a second surface; forming an anode catalyst layer on the first surface of the ionomer membrane; and forming a cathode catalyst layer on the second surface of the ionomer membrane, wherein the ionomer membrane comprises at least one reinforcement layer, said reinforcement layer comprising a porous polymer reinforcement material which is impregnated with ionomer, and wherein the or each reinforcement layer comprises between 5 and 20 wt% of the porous polymer reinforcement material relative to a total weight of ionomer and porous polymer reinforcement material in the reinforcement layer. Again, it is preferred that the ionomer membrane is formed by: depositing a dispersion of ionomer in liquid carrier onto a solid backing layer and at least partially drying to form a first ionomer layer; depositing a dispersion of ionomer in liquid carrier onto the first ionomer layer and at least partially drying to form a second ionomer layer over the first ionomer layer; and optionally sequentially depositing and drying one or more further layers of ionomer over the first and second ionomer layers to build up the ionomer membrane structure on the solid backing layer, wherein at least one of the ionomer layers comprises the reinforcement material.

The aforementioned examples focus primarily on features of the ionomer membrane within the CCM structure. Details of the anode and cathode catalyst layers are provided in the following sections.

### Anode Catalyst Layer

A suitable catalyst material for the anode layer is electrochemical grade iridium oxide from J&J Materials Inc. This electrochemical grade of iridium oxide from J&J Materials has been found to provide good performance in water electrolyser applications.

Beyond the iridium oxide catalyst material used in the anode layer, there are also several key aspects to how the anode layer is fabricated using such a catalyst material in order to improve performance. Important aspects of the anode layer include:
- formulation of the ink - ingredients, amounts of each, choice of solvents, choice of ionomer (which is different to the ionomer used in the membrane);
- dilution in steps during the ink-making process;
- drying conditions to get the right layer structure; and
- distribution of iridium oxide catalyst across/through the final layer.

The ink can be either deposited onto a carrier substrate (e.g., a PTFE sheet) to form a decal and then transferred to the membrane (e.g., by hot pressing). Alternatively, the ink can be directly coated onto the membrane. When deposited, selection of suitable drying conditions is important to obtain a suitable layer structure including a suitable distribution of iridium oxide catalyst across the layer.

It has been found that optimizing ionomer concentration and drying conditions leads to a significant improvement of CCM performance in water electrolyser applications. Furthermore, it has been found that utilizing a different ionomer in the anode catalyst layer to the one used in the ionomer membrane leads to improved performance. Accordingly, there is provided a catalyst coated membrane for a water electrolyser, the catalyst coated membrane comprising: an ionomer membrane having a first surface and a second surface; an anode catalyst layer on the first surface of the ionomer membrane; and a cathode catalyst layer on the second surface of the ionomer membrane, wherein the anode catalyst layer comprises an iridium containing catalyst material disposed in ionomer, and wherein the ionomer in the anode catalyst layer is different to the ionomer in the ionomer membrane.

The ionomer in the anode catalyst layer preferably has an equivalent weight of: no less than 900EW, 950EW, 1000EW, or 1050EW; no more than 1300EW, 1200EW, or 1150EW; or within a range defined by any combination of the aforementioned lower and upper limits. The side chains of the ionomer each comprise a sulphonate group. Optionally, the side chains of the ionomer include an ether group in addition to the ether linkage to the backbone. Furthermore, optionally, the side chains of the ionomer include a CF3 group. The side chains of the ionomer may have the structure: -CF2-CF(CF3)-O-CF2-CF2-SO3H. An example of such an ionomer is Nafion D-2021CS.

The ionomer of the anode catalyst layer differs from the ionomer in the membrane in that it has one or more of: a higher equivalent weight than the membrane ionomer; longer side chains than the membrane ionomer; and/or different chemical groups in the side chains compared to the membrane ionomer (e.g. an ether group and/or a CF3 group). In contrast, the ionomer in the membrane has an equivalent weight of: no more than 880EW, 850EW, or 830EW; no less than 750EW, 770EW, or 790EW; or within a range defined by any combination of the aforementioned upper and lower limits. The side chains of the membrane ionomer also each comprise a sulphonate group. However, the side chains are shorter than those of the anode ionomer. The side chains of the membrane ionomer do not contain an ether group (except for the ether linkage to the backbone) and/or they do not include a CF3 group. The side chains of the membrane ionomer may have the structure: -CF2-CF2-CF2-CF2-SO3H. An example of such an ionomer is 3M 825 ionomer.

As such, according to one example, the ionomer in the anode catalyst layer is Nafion D-2021CS ionomer. Nafion D-2021CS is a high equivalent weight ionomer that has long side chains with sulfonate end groups. In the presence of water these sulfonate groups hydrate, solvate, and dissociate into protons and this allows the exchange of protons from anode to cathode. In contrast, the ionomer in the ionomer membrane can be 3M 800, 3M 825, or Asahi 800 ionomer. These ionomers have a lower equivalent weight and shorter side chains.

The anode catalyst layer may comprise between 5 and 20 wt% ionomer, for example between 8 and 15 wt%. The amount of catalyst material in the anode catalyst layer can be 80 to 95 wt%, optionally between 85 and 92 wt%. The iridium loading of the anode catalyst layer is preferably less than 3 mg Ir/cm², optionally in a range 0.05 and 3 mg Ir/cm². The iridium containing catalyst material can be an iridium oxide catalyst material and the anode catalyst layer may have a thickness between 6 and 15 micrometres.

In addition to the above, the ionomer in the anode catalyst layer can be different to the ionomer in the cathode catalyst layer. For example, the cathode catalyst layer may comprise a platinum containing catalyst material disposed in ionomer, wherein the ionomer in the cathode catalyst layer is different to the ionomer in the anode catalyst layer. The ionomer in the cathode layer may be the same or similar to the ionomer in the membrane.

In these examples, the CCM is manufactured by a method comprising: forming an ionomer membrane having a first surface and a second surface; forming an anode catalyst layer on the first surface of the ionomer membrane; and forming a cathode catalyst layer on the second surface of the ionomer membrane, wherein the anode catalyst layer is fabricated by formulating an ink comprising a dispersion of an iridium containing catalyst material and an ionomer in a liquid carrier, depositing the ink, and drying, wherein the ionomer in the anode catalyst layer is different to the ionomer in the ionomer membrane. The ink can be deposited directly on the ionomer membrane and dried to form the anode catalyst layer. Alternatively, the ink can be deposited on a carrier layer and dried to form a decal comprising the anode catalyst layer which is then transferred from the decal to the ionomer membrane.

The ink is advantageously prepared by mixing the iridium containing catalyst material with water to form a slurry and then mixing the slurry with organic solvent and ionomer. The ink may be formulated to have a solid content between 35 and 55 wt%. Furthermore, after deposition, the ink is dried at a temperature at or above the glass transition temperature of the ionomer in the anode catalyst layer in order to both evaporate solvent from the layer and also promote flow of the ionomer.

In one example, a 2mg Ir/cm² anode catalyst layer can be fabricated using an ink formulation comprising an IrO₂ catalyst from J&J Materials with 12% of a high EW ionomer having long side chains (e.g., Nafion D-2021CS ionomer). The wet ink comprises catalyst, ionomer, water, and 1-propanol. The water and propanol are added to adjust the solid content of the ink that is being made. The first step involves wetting out the catalyst with the required amount of water. This slurry is mixed thoroughly to ensure that the catalyst is completely wetted out. This is a critical step as the solvent is flammable, and hence to prevent it from catching fire the catalyst is pre-wetted prior to mixing with ionomer/solvent. The next step involves the addition of the required amount of ionomer and propanol. After this addition the slurry is mixed and then diluted to a target solid content for deposition. In this regard, it is advantageous to perform the final dilution just before the ink is to be used in the coating process. For example, after formulating the ink comprising the dispersion of the iridium containing catalyst material and the ionomer in the liquid carrier, the ink is diluted to a target solid content no more than 24 hours, 12 hours, 8 hours, 4 hours, 2 hours, 1 hour, or 30 minutes prior to depositing the ink.

Once the ink is diluted to the correct solid content for deposition, the ink can be printed onto PTFE. The ink is dried at a temperature suitable to both evaporate the solvent and to stabilize the ionomer within the layer.

The anode catalyst layer on the PTFE can be transferred to the ionomer membrane to form a CCM by hot pressing. SEM images of the final CCM show that the resultant anode catalyst layer is between 9 and 11.5 micrometres after hot pressing.

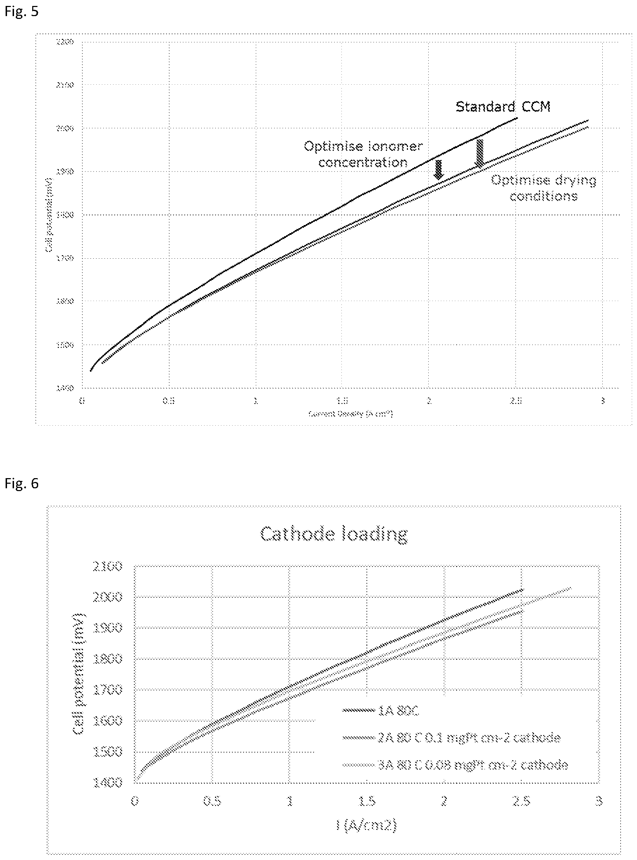

Figure 5 shows an example of how changes to the ionomer in the catalyst layer and changes to the method of fabricating the catalyst layer can lead to an improvement in performance in terms of current density at a given operating potential.

### Cathode Catalyst Layer

The cathode catalyst layer can be based on a particular type of platinum-on-carbon catalyst selected for characteristics which are beneficial in PEMWE applications. The platinum-on-carbon catalyst material can be formulated into an ink, printed ex-situ onto a PTFE sheet, and transferred onto the membrane by hot pressing. Alternatively, the ink can be directly coated onto the membrane. The catalyst layer comprises both catalyst and an ionomer.

The present specification provides an improved cathode catalyst layer for use in a catalyst coated membrane for a water electrolyser. The catalyst coated membrane comprises: an ionomer membrane having a first surface and a second surface; an anode catalyst layer on the first surface of the ionomer membrane; and a cathode catalyst layer on the second surface of the ionomer membrane, wherein the cathode catalyst layer comprises a platinum-on-carbon catalyst material disposed in ionomer, and wherein the cathode catalyst layer has a platinum loading, provided by the platinum-on-carbon catalyst material, of less than 1 mg_{Pt} cm⁻².

Surprisingly, it has been found that when using a platinum-on-carbon catalyst material, in particular at certain ionomer/carbon weight ratios, reducing the platinum loading actually leads to an improvement in performance in terms of current density. That is, reducing the platinum loading using a platinum-on-carbon catalyst material surprisingly resulted in an increase in the current density for a given potential. This is illustrated in Figure 6 which shows that high performance can be achieved at low platinum loadings by optimising the cathode catalyst layer. That said, there is also a lower limit to the amount of platinum which must be provided. As such, the platinum loading of the cathode layer is: less than 1 mg_{Pt} cm⁻², 0.8 mg_{Pt} cm⁻², 0.6 mg_{Pt} cm⁻², 0.5 mg_{Pt} cm⁻², 0.4 mg_{Pt} cm⁻², 0.3 mg_{Pt} cm⁻², 0.2 mg_{Pt} cm⁻², or 0.1 mg_{Pt} cm⁻²; more than 0.01 mg_{Pt} cm⁻², 0.04 mg_{Pt} cm⁻², or 0.06 mg_{Pt} cm⁻²; or within a range defined by any of the aforementioned upper and lower limits, such as less than 0.5 mg_{Pt} and more than 0.01 mg_{Pt} cm⁻², or less than 0.2 mg_{Pt} and more than 0.01 mg_{Pt} cm⁻²..

The platinum-on-carbon catalyst material may comprise between 20 and 60 wt% platinum, optionally between 40 and 60 wt% platinum. The platinum is provided as nanoparticles on the carbon support material. The nanoparticles of platinum may have a crystallite size of: at least 1 nm, 2 nm, or 3 nm; no more than 15nm, 10 nm, or 6 nm; or within a range defined by any combination of the aforementioned lower and upper limits. Crystallite size can be measured through XRD and fitted using Rietveld analysis. X-ray diffraction data is collected using Cu Kα radiation (λ = 1.5406 and 1.54439 Å) on a Bruker AXS D8. Crystallite sizes are calculated from the Rietveld refinements using the LVol-IB method.

The platinum-on-carbon catalyst material may also have a CO metal area per gram of platinum of: at least 50 m² g⁻¹, 55 m² g⁻¹, or 60 m² g⁻¹; no more than 120 m² g⁻¹, 100 m² g⁻¹, 80 m² g⁻¹, 75 m² g⁻¹, or 70 m² g⁻¹; or within a range defined by any combination of the aforementioned lower and upper limits. Metal surface areas can be determined through pulsed CO chemisorption in a helium carrier gas using a Micromeritics Autochem II chemisorption analyzer.

The platinum-on-carbon catalyst material may comprise a carbon support material which is a partially graphitized carbon material (e.g., a heat-treated carbon black). Graphite material is more corrosion resistant. However, graphite support materials have a low surface area. As such, there is a compromise between the requirements of high surface area and high corrosion resistance. A partially graphitized material has been found to be a good compromise between surface area requirements and corrosion resistance requirements for the carbon support in this water electrolyser application.

The ionomer in the cathode catalyst layer may have an equivalent weight of: no more than 880EW, 850EW, or 830EW; no less than 750EW, 770EW, or 790EW; or within a range defined by any combination of the aforementioned upper and lower limits. The side chains of the cathode ionomer each comprise a sulphonate group. However, the side chains are preferably shorter than those of the anode ionomer. The side chains of the cathode ionomer may also not contain an ether group (except for the ether linkage to the backbone) and/or they may not include a CF3 group. The side chains of the cathode ionomer may have the structure: -CF2-CF2-CF2-CF2-SO3H. An example of such an ionomer is 800EW 3M C4 side chain. The ionomer of the cathode layer may be the same or similar to that used in the membrane.

The cathode catalyst layer may have an ionomer/carbon weight ratio of between 0.6 and 1.0 (noting that this is the weight ratio between the ionomer and carbon, the platinum is not taken into account in this calculation). Furthermore, the cathode catalyst layer may have a thickness in a range 1 to 15, 4 to 15, or 8 to 15 micrometres.

An example of such a cathode layer comprises the following features:
- Nominal Pt Loading - 0.4mgPt cm⁻²
- ionomer - 800EW 3M C4 side chain
- lonomer/Carbon weight ratio - 0.8
- Thickness - approximately 10 to 11 micrometres
- Catalyst is 50wt% Pt-on-carbon
- Carbon is a partially graphitized carbon support material

Also provided is a method of manufacturing a catalyst coated membrane for a water electrolyser, the method comprising: forming an ionomer membrane having a first surface and a second surface; forming an anode catalyst layer on the first surface of the ionomer membrane; and forming a cathode catalyst layer on the second surface of the ionomer membrane, wherein the cathode catalyst layer is fabricated by formulating an ink comprising a dispersion of a platinum-on-carbon catalyst material and an ionomer in a liquid carrier, depositing the ink, and drying, wherein the cathode catalyst layer has a platinum loading, provided by the platinum-on-carbon catalyst material, of less than 1 mg_{Pt} cm⁻². The ink can be deposited directly on the ionomer membrane and dried to form the cathode catalyst layer. Alternatively, the ink can be deposited on a carrier layer and dried to form a decal comprising the cathode catalyst layer which is then transferred from the decal to the ionomer membrane.

### Example CCM Structures

In accordance with this specification, inventors have developed several different versions of catalyst coated membranes (CCMs) for green hydrogen electrolyser applications. These CCMs share a common structure: cathode catalyst layer / proton exchange membrane / anode catalyst layer. The cathode catalyst layer and the anode catalyst layer are substantially the same for each variant, the cathode layer being based on a platinum-on-carbon catalyst as described previously in this specification and the anode layer being based on an iridium oxide catalyst as described previously in this specification. Furthermore, the membrane for each variant is a multilayer structure comprising ionomer layers with ceria additive and reinforcement layers as described previously in this specification. The ionomer, ceria, and reinforcement materials are the same in all variants. The main difference between the variants is the thickness of the membrane and the specific multi-layer structure of the membrane. The membrane variants are as follows:
50-micron, single reinforced membrane;
80-micron, double reinforced membrane; and
15-micron, single reinforced membrane.

Each of these different variants is discussed in more detail below.

### Example 1: 50-micron, single reinforced CCM product variant

The 50-micron membrane has the following structure:

| |
|---|
| Layer 1: 10 µm thickness |
| Layer 2: 20 µm thickness including ePTFE reinforcement |
| Layer 3: 10 µm thickness |
| Layer 4: 10 µm thickness |

The layers are formed from an ionomer solution prepared by suspending an ionomer (800EW perfluorosulphonic acid "PFSA") and ceria (0.26 wt% ceria relative to the weight of ionomer) in an 80:20 ethanol:water mixture. ePTFE is expanded polytetrafluoroethylene. The layers are applied sequentially by printing/coating directly onto each other, with drying between each addition. The thickness refers to the layer thickness after drying.

A catalyst coated membrane is prepared by attaching an anode containing iridium oxide on one side of the 50-micron membrane and a cathode containing platinum-on-carbon on the other side of the 50-micron membrane. The catalyst layers are printed ex-situ onto a PTFE sheet and transferred onto the membrane by hot pressing. The catalyst layers comprise both catalyst and an ionomer. The catalyst ink formulations, fabrication processes, and layer structures are as described previously in this specification.

The table below summarize the materials and method for construction of the single reinforced, 50-micron thick membrane comprising ceria additive.

| | 50-micron membrane |
|---|---|
| Thickness | 50µm |
| Ce Loading | 16µg/cm² |
| Construction | 4 coating passes of thickness: 10 µm; 20 µm; 10 µm; 10 µm;. |
| Reinforcement | Pass 2 |
| lonomer Dispersion | see below table |

The ionomer dispersion composition is as follows:

| | |
|---|---|
| | |
| PFSA Solids %wgt | 16.6% |
| Ceria % wrt Ionomer | 0.26% |
| Ethanol:Water | 80 : 20 |

The four coating passes for fabricating the membrane are as follows:

| | **Pass 1** | **Pass 2** | **Pass 3** | **Pass 4** |
|---|---|---|---|---|
| Coating Weight (gsm) | 20 | 40 | 20 | 20 |
| XRF Ce µg/cm² | 3 | 10 | 13 | 16 |
| ePTFE | | Yes | | |

For the coating process, a pump is calibrated to deliver a set weight of ionomer dispersion per minute to a die to achieve the required dry gsm coating. Factors include: target gsm; ionomer dispersion %solids; ionomer dispersion viscosity; and coating speed m/min. Process controls are such that each layer will have a target for thickness gsm (measured by ultrasound thickness measurement system), Ce loading (µg/cm² - measured by in-line XRF), coating speed (m/min), and oven temperatures (°C). The 50-micrometre thick single reinforced membrane is thinner than typical membranes used in electrolyser applications but has an unusually high rigidity for its thinness. Due to the thinness of the membrane, it has a lower protonic resistance and therefore a lower operating voltage at a given current density than thicker membranes of the same equivalent weight (EW). For example, the membrane shows a > 60% reduction in resistance compared to Nafion^{™} 115 (N115).

### Example 2: 80-micron, double reinforced CCM product variant

The 80-micron membrane has the following structure:

| |
|---|
| Layer 1: 9 µm thickness |
| Layer 2: 18 µm thickness ION0046 including ePTFE reinforcement |
| Layer 3: 9 µm thickness |
| Layer 4: 9 µm thickness |
| Layer 5: 18 µm thickness including ePTFE reinforcement |
| Layer 6: 9 µm thickness |
| Layer 7: 8 µm thickness |

The layers are formed from an ionomer solution prepared by suspending an ionomer (800EW perfluorosulphonic acid "PFSA") and ceria (0.26 wt% ceria relative to the weight of ionomer) in an 80:20 ethanol:water mixture. ePTFE is expanded polytetrafluoroethylene. The layers are applied sequentially by printing directly onto each other, with drying between each addition. The thickness refers to the layer thickness after drying.

A catalyst coated membrane is prepared by attaching an anode containing iridium oxide on one side of the 80-micron membrane and a cathode containing platinum-on-carbon on the other side of the 80-micron membrane. The catalyst layers are printed ex-situ onto a PTFE sheet and transferred onto the membrane by hot pressing. The catalyst layers comprise both catalyst and an ionomer. The catalyst ink formulations, fabrication processes, and layer structures are as described previously in this specification.

Making an 80-micrometre membrane is difficult as it rather too thick to be printed/coated and rather too thin to be extruded. Figure 1 shows how the 80-micrometre double reinforced membrane is manufactured in a series of 7 printing/coating passes with reinforcement layers added in passes 2 and 5. The proton conductive polymer layers are formed from perfluorosulfonic acid (PFSA) ionomer (3M 800EW PFSA ionomer) while the reinforcement polymer layers are formed of expanded polytetrafluoroethylene (ePTFE reinforcement: 4.7gsm). A substrate (PET with 1 side release layer) is used for the fabrication of the membrane.

The table below summarize the materials and method for construction of a double reinforced, 80-micron thick membrane comprising ceria additive.

| | 80-micron membrane |
|---|---|
| Thickness | 80µm (160gsm) |
| Ce Loading | 26.5µg/cm² |
| Construction | 7 coating passes of thickness: 9 µm; 18 µm; 9 µm; 9 µm; 18 µm; 9 µm; 8 µm. |
| Reinforcement | Pass 2 + 5 |
| Ionomer Dispersion | (see below table) |

The ionomer dispersion composition is as follows:

| | |
|---|---|
| | |
| PFSA Solids %wgt | 16.6% |
| Ceria % wrt Ionomer | 0.26% |
| Ethanol:Water | 80 : 20 |

The seven coating passes for fabricating the membrane are as follows:

| | **Pass 1** | **Pass 2** | **Pass 3** | **Pass 4** | **Pass 5** | **Pass 6** | **Pass 7** |
|---|---|---|---|---|---|---|---|
| Coating Weight (gsm) | 18 | 36 | 18 | 18 | 36 | 18 | 16 |
| XRF Ce µg/cm² | 2.8 | 8 | 11.1 | 14.3 | 19 | 22.2 | 25 |
| ePTFE | | Yes | | | Yes | | |

For the coating process, a pump is calibrated to deliver a set weight of ionomer dispersion per minute to a die to achieve the required dry gsm coating. Factors include: target gsm; ionomer dispersion %solids; ionomer dispersion viscosity; and coating speed m/min. Process controls are such that each layer will have a target for thickness gsm (measured by ultrasound thickness measurement system), Ce loading (µg/cm² - measured by in-line XRF), coating speed (m/min), and oven temperatures (°C). Thickness was measured manually using a drop gauge for passes 2 to 7. It is not possible to conduct a gravimetric check on pass 1 due to the fragile nature of the membrane after only one printing/coating pass such that the layer cannot be cut off the backing accurately. Basis weight / thickness is measure manually using a gravimetric method and using an in-line ultrasound thickness measurement system (from Mesys^{™}). It was noted that calibration of the ultrasound thickness measurement system starts to lose accuracy after pass 5.

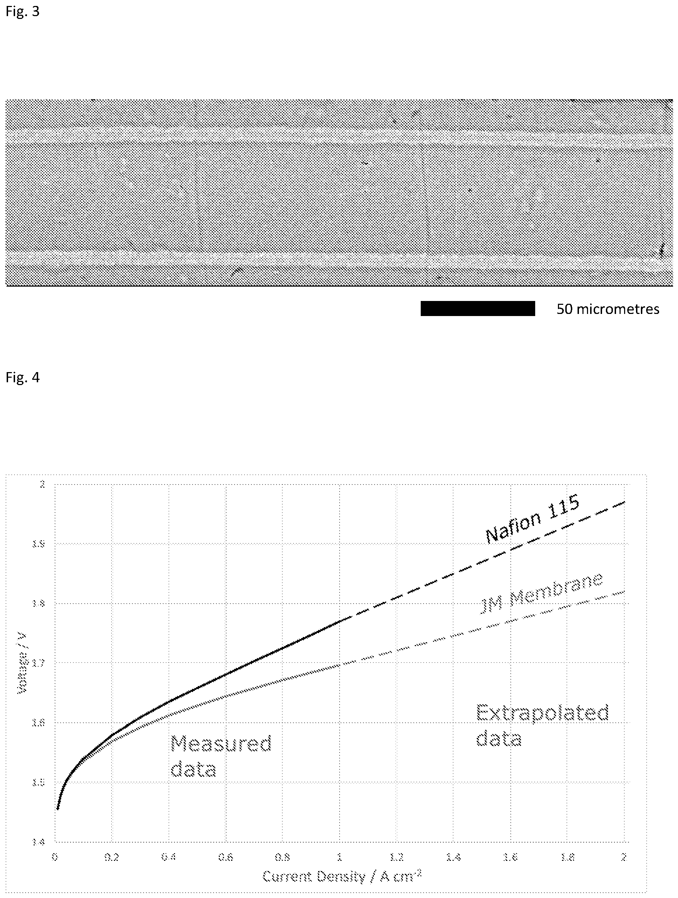

Figure 3 shows a micrograph image of the 80-micron, double reinforced membrane. It is 80 micrometres thick and comprises two reinforcement polymer layers. It also contains ceria which is a free radical scavenger, preventing membrane degradation and extending operational lifetime. The 80-micron, double reinforced CCM product has an improved performance in terms of increased current density at a given voltage when compared with a Nafion^{™} 115 membrane as shown in Figure 4.

The 80-micrometre thick double reinforced membrane is thinner than typical membranes used in electrolyser applications but has an unusually high rigidity for its thinness. Due to the thinness of the membrane, it has a lower protonic resistance and therefore a lower operating voltage at a given current density than thicker membranes of the same equivalent weight (EW). For example, the membrane shows a 60% reduction in resistance compared to Nafion^{™} 115 (N115).

### Example 3: 15-micron, single reinforced CCM product variant

This CCM product variant is based on a 15-micron, single reinforced membrane. The membrane is fabricated in a similar manner to the previously described variants but has only two printed layers, one of which comprises reinforcement. In other respects, the CCM is manufactured using the same methodology. The 15-micrometre thick single reinforced membrane is much thinner than the other examples. Due to the thinness of the membrane, it has a very lower protonic resistance and therefore a very low operating voltage at a given current density than thicker membranes of the same equivalent weight (EW). That said, this membrane structure is only suitable for certain applications as it is too thin for many water electrolyser applications.

### Example 4: Catalyst layer improvements

The previous three CCM examples were fabricated using the same catalyst ink formulations and processing methods for the catalyst layers. As previously indicated, formulations and processing parameters have been developed to provide improvements in CCM performance in water electrolyser applications. It has been found that optimizing ionomer concentration and drying conditions of the catalyst layers leads to a significant improvement of CCM performance in water electrolyser applications as previously described in this specification. Figure 6 shows electrochemical performance of three catalyst layers at 0.4 mg_{Pt}/cm⁻² (1A), 0.1 mg_{Pt}/cm⁻² (2A) and 0.08 mg_{Pt}/cm⁻² (3A)..

While this invention has been particularly shown and described with reference to certain examples, it will be understood to those skilled in the art that various changes in form and detail may be made without departing from the scope of the invention as defined by the appended claims.

## Claims

1. A catalyst coated membrane for a water electrolyser, the catalyst coated membrane comprising:
an ionomer membrane having a first surface and a second surface;
an anode catalyst layer on the first surface of the ionomer membrane; and
a cathode catalyst layer on the second surface of the ionomer membrane,
wherein the ionomer membrane comprises reinforcement material, and
wherein the reinforcement material is distributed asymmetrically relative to a central plane of the ionomer membrane such that its average location is closer to the anode catalyst layer than the cathode catalyst layer.

2. A catalyst coated membrane according claim 1, wherein the ionomer membrane is a multilayer structure formed by: at least 3 ionomer layers and no more than 15 ionomer layers, and wherein at least one of the ionomer layers comprise a reinforcement material in addition to the ionomer.

3. A catalyst coated membrane according to claim 2, wherein only one of the ionomer layers comprises reinforcement material and said layer is closer to the anode catalyst layer than the cathode catalyst layer.

4. A catalyst coated membrane according to claim 2, wherein two of the ionomer layers comprise reinforcement material and a mid-point between the two ionomer layers is closer to the anode catalyst layer than the cathode catalyst layer.

5. A catalyst coated membrane according to any preceding claim, wherein the reinforcement material comprises a porous polymer layer which is impregnated with ionomer.

6. A catalyst coated membrane according to any preceding claim, wherein one or both of the anode catalyst layer and the cathode catalyst layer comprise both catalyst material and ionomer material and the ionomer in one or both of the anode catalyst layer and the cathode catalyst layer is different to the ionomer in the ionomer membrane.

7. A catalyst coated membrane according to any preceding claim, wherein the first surface of the ionomer membrane has fewer defects than the second surface of the ionomer membrane.

8. A catalyst coated membrane according to any preceding claim, wherein the anode catalyst layer comprises an iridium containing catalyst material disposed in ionomer, and wherein the ionomer in the anode catalyst layer differs from the ionomer in the membrane in that it has one or more of: a higher equivalent weight than the membrane ionomer and / or longer side chains than the membrane ionomer.

9. A catalyst coated membrane according to any preceding claim, wherein the anode catalyst layer comprises an iridium containing catalyst material disposed in ionomer, and wherein the ionomer in the anode catalyst layer has an equivalent weight of no less than 900EW and no more than 1300EW.

10. A catalyst coated membrane according to any preceding claim, wherein the membrane ionomer has an equivalent weight greater than 750EW and less than 850EW.

11. A catalyst coated membrane according to any preceding claim, wherein the cathode catalyst layer comprises a platinum-on-carbon catalyst material disposed in ionomer, and wherein the cathode catalyst layer has a platinum loading, provided by the platinum-on-carbon catalyst material, of less than 0.5 mg_{Pt} cm⁻² and more than 0.01 mg_{Pt} cm⁻².

12. A catalyst coated membrane according to any preceding claim, wherein the cathode catalyst layer comprises a platinum-on-carbon catalyst material disposed in ionomer and the cathode catalyst layer has an ionomer/carbon weight ratio of between 0.6 and 1.0.

13. A method of manufacturing a catalyst coated membrane for a water electrolyser according to any preceding claim, the method comprising:
forming an ionomer membrane having a first surface and a second surface, the ionomer membrane comprising reinforcement material;
forming an anode catalyst layer on the first surface of the ionomer membrane; and
forming a cathode catalyst layer on the second surface of the ionomer membrane,
wherein the reinforcement material is distributed asymmetrically relative to a central plane of the ionomer membrane such that its average location is closer to the anode catalyst layer than the cathode catalyst layer.

14. A method according to claim 13, wherein the ionomer membrane is formed by depositing a dispersion of ionomer in liquid carrier onto a solid backing layer and at least partially drying to form a first ionomer layer;
depositing a dispersion of ionomer in liquid carrier onto the first ionomer layer and at least partially drying to form a second ionomer layer over the first ionomer layer; and
optionally sequentially depositing and drying one or more further layers of ionomer over the first and second ionomer layers to build up the ionomer membrane structure on the solid backing layer,
wherein at least one of the ionomer layers comprises the reinforcement material.

15. A water electrolyser comprising a catalyst coated membrane according to any one of claims 1 to 12.

## Patentansprüche

1. Katalysatorbeschichtete Membran für einen Wasserelektrolyseur, die katalysatorbeschichtete Membran umfassend:
eine lonomermembran, die eine erste und eine zweite Oberfläche aufweist;
eine Anodenkatalysatorschicht auf der ersten Oberfläche der lonomermembran; und
eine Kathodenkatalysatorschicht auf der zweiten Oberfläche der lonomermembran,
wobei die lonomermembran Verstärkungsmaterial umfasst und
wobei das Verstärkungsmaterial relativ zu einer zentralen Ebene der lonomermembran derart asymmetrisch verteilt ist, dass seine durchschnittliche Position näher an der Anodenkatalysatorschicht als der Kathodenkatalysatorschicht ist.

2. Katalysatorbeschichtete Membran nach Anspruch 1, wobei die lonomermembran eine Mehrschichtstruktur ist, die ausgebildet ist durch:
mindestens 3 lonomerschichten und nicht mehr als 15 lonomerschichten, und
wobei mindestens eine der lonomerschichten ein Verstärkungsmaterial zusätzlich zu dem lonomer umfasst.

3. Katalysatorbeschichtete Membran nach Anspruch 2, wobei nur eine der lonomerschichten Verstärkungsmaterial umfasst und die Schicht näher an der Anodenkatalysatorschicht als der Kathodenkatalysatorschicht ist.

4. Katalysatorbeschichtete Membran nach Anspruch 2, wobei zwei der lonomerschichten Verstärkungsmaterial umfassen und ein Mittelpunkt zwischen den zwei lonomerschichten näher an der Anodenkatalysatorschicht als der Kathodenkatalysatorschicht ist.

5. Katalysatorbeschichtete Membran nach einem der vorstehenden Ansprüche, wobei das Verstärkungsmaterial eine poröse Polymerschicht umfasst, die mit lonomer imprägniert ist.

6. Katalysatorbeschichtete Membran nach einem der vorstehenden Ansprüche, wobei eine oder beide von der Anodenkatalysatorschicht und der Kathodenkatalysatorschicht beides, Katalysatormaterial und lonomermaterial, umfassen und das lonomer in einer oder beiden von der Anodenkatalysatorschicht und der Kathodenkatalysatorschicht sich von dem lonomer in der lonomermembran unterscheidet.

7. Katalysatorbeschichtete Membran nach einem der vorstehenden Ansprüche, wobei die erste Oberfläche der lonomermembran weniger Defekte als die zweite Oberfläche der lonomermembran aufweist.

8. Katalysatorbeschichtete Membran nach einem der vorstehenden Ansprüche, wobei die Anodenkatalysatorschicht ein iridiumhaltiges Katalysatormaterial, das in dem lonomer eingerichtet ist, umfasst und wobei das lonomer sich in der Anodenkatalysatorschicht von dem lonomer in der Membran dadurch unterscheidet, dass es eines oder mehrere aufweist von: einem höheren Äquivalentgewicht als das Membranionomer und/oder längeren Seitenketten als das Membranionomer.

9. Katalysatorbeschichtete Membran nach einem der vorstehenden Ansprüche, wobei die Anodenkatalysatorschicht ein iridiumhaltiges Katalysatormaterial, das in dem lonomer eingerichtet ist, umfasst und wobei das lonomer in der Anodenkatalysatorschicht ein Äquivalentgewicht von nicht kleiner als 900 EW und nicht mehr als 1300 EW aufweist.

10. Katalysatorbeschichtete Membran nach einem der vorstehenden Ansprüche, wobei das Membranionomer ein Äquivalentgewicht von größer als 750 EW und kleiner als 850 EW aufweist.

11. Katalysatorbeschichtete Membran nach einem der vorstehenden Ansprüche, wobei die Kathodenkatalysatorschicht ein Platin-auf-Kohlenstoff-Katalysatormaterial, das in dem lonomer eingerichtet ist, umfasst und wobei die Kathodenkatalysatorschicht eine Platinbeladung, die durch das Platin-auf-Kohlenstoff-Katalysatormaterial bereitgestellt ist, von kleiner als 0,5 mg_{Pt} cm⁻² und mehr als 0,01 mg_{Pt} cm⁻² aufweist.

12. Katalysatorbeschichtete Membran nach einem der vorstehenden Ansprüche, wobei die Kathodenkatalysatorschicht ein Platin-auf-Kohlenstoff-Katalysatormaterial, das in dem lonomer eingerichtet ist, umfasst und die Kathodenkatalysatorschicht ein lonomer/Kohlenstoff-Gewichtsverhältnis von zwischen 0,6 und 1,0 aufweist.

13. Verfahren zum Herstellen einer katalysatorbeschichteten Membran für einen Wasserelektrolyseur nach einem der vorstehenden Ansprüche, das Verfahren umfassend:
Ausbilden einer lonomermembran, die eine erste Oberfläche und eine zweite Oberfläche aufweist, die lonomermembran umfassend Verstärkungsmaterial;
Ausbilden einer Anodenkatalysatorschicht auf der ersten Oberfläche der lonomermembran; und
Ausbilden einer Kathodenkatalysatorschicht auf der zweiten Oberfläche der lonomermembran,
wobei das Verstärkungsmaterial relativ zu einer zentralen Ebene der lonomermembran derart asymmetrisch verteilt ist, dass seine durchschnittliche Position näher an der Anodenkatalysatorschicht als der Kathodenkatalysatorschicht ist.

14. Verfahren nach Anspruch 13, wobei die lonomermembran ausgebildet wird durch Abscheiden einer Dispersion des lonomers in einem flüssigen Träger auf eine feste Stützschicht und mindestens teilweises Trocknen, um eine erste lonomerschicht auszubilden;
Abscheiden einer Dispersion des lonomers in dem flüssigen Träger auf die erste lonomerschicht und mindestens teilweises Trocknen, um eine zweite lonomerschicht über der ersten lonomerschicht auszubilden; und
optional sequenzielles Abscheiden und Trocknen einer oder mehrerer weiterer Schichten des lonomers über der ersten und der zweiten lonomerschicht, um die lonomermembranstruktur auf der festen Stützschicht aufzubauen,
wobei mindestens eine von den lonomerschichten das Verstärkungsmaterial umfasst.

15. Wasserelektrolyseur, umfassend eine katalysatorbeschichtete Membran nach einem der Ansprüche 1 bis 12.

## Revendications

1. Membrane revêtue de catalyseur destinée à un électrolyseur d'eau, la membrane revêtue de catalyseur comprenant :
une membrane ionomère ayant une première surface et une seconde surface ;
une couche de catalyseur d'anode sur la première surface de la membrane ionomère ; et
une couche de catalyseur de cathode sur la seconde surface de la membrane ionomère,
dans laquelle la membrane ionomère comprend un matériau de renfort, et
dans laquelle le matériau de renfort est réparti asymétriquement par rapport à un plan central de la membrane ionomère de telle sorte que sa localisation moyenne est plus près de la couche de catalyseur d'anode que de la couche de catalyseur de cathode.

2. Membrane revêtue de catalyseur selon la revendication 1, dans laquelle la membrane ionomère est une structure multicouche formée par : au moins 3 couches d'ionomère et pas plus de 15 couches d'ionomère, et dans laquelle au moins l'une des couches d'ionomère comprend un matériau de renfort en plus de l'ionomère.

3. Membrane revêtue de catalyseur selon la revendication 2, dans laquelle une seule des couches d'ionomère comprend un matériau de renfort et ladite couche est plus près de la couche de catalyseur d'anode que de la couche de catalyseur de cathode.

4. Membrane revêtue de catalyseur selon la revendication 2, dans laquelle deux des couches d'ionomère comprennent un matériau de renfort et un point médian entre les deux couches d'ionomère est plus près de la couche de catalyseur d'anode que de la couche de catalyseur de cathode.

5. Membrane revêtue de catalyseur selon l'une quelconque revendication précédente, dans laquelle le matériau de renfort comprend une couche polymère poreuse qui est imprégnée d'ionomère.

6. Membrane revêtue de catalyseur selon l'une quelconque revendication précédente, dans laquelle l'une et/ou l'autre de la couche de catalyseur d'anode et de la couche de catalyseur de cathode comprennent à la fois du matériau catalyseur et du matériau ionomère et l'ionomère dans l'une et/ou l'autre de la couche de catalyseur d'anode et de la couche de catalyseur de cathode est différent de l'ionomère dans la membrane ionomère.

7. Membrane revêtue de catalyseur selon l'une quelconque revendication précédente, dans laquelle la première surface de la membrane ionomère a moins de défauts que la seconde surface de la membrane ionomère.

8. Membrane revêtue de catalyseur selon l'une quelconque revendication précédente, dans laquelle la couche de catalyseur d'anode comprend un matériau catalyseur contenant de l'iridium disposé dans l'ionomère, et dans laquelle l'ionomère dans la couche de catalyseur d'anode diffère de l'ionomère dans la membrane en ce qu'il a un ou plusieurs parmi : un poids équivalent plus élevé que l'ionomère de membrane et/ou des chaînes latérales plus longues que l'ionomère de membrane.

9. Membrane revêtue de catalyseur selon l'une quelconque revendication précédente, dans laquelle la couche de catalyseur d'anode comprend un matériau catalyseur contenant de l'iridium disposé dans de l'ionomère, et dans laquelle l'ionomère dans la couche de catalyseur d'anode a un poids équivalent de pas moins de 900EW et pas plus de 1300EW.

10. Membrane revêtue de catalyseur selon l'une quelconque revendication précédente, dans laquelle l'ionomère de membrane a un poids équivalent supérieur à 750EW et inférieur à 850EW.

11. Membrane revêtue de catalyseur selon l'une quelconque revendication précédente, dans laquelle la couche de catalyseur de cathode comprend un matériau catalyseur de platine sur carbone disposé dans un ionomère, et dans laquelle la couche de catalyseur de cathode a un chargement en platine, fourni par le matériau catalyseur de platine sur carbone, inférieur à 0,5 mg_{Pt} cm⁻² et supérieur à 0,01 mg_{Pt} cm⁻².

12. Membrane revêtue de catalyseur selon l'une quelconque revendication précédente, dans laquelle la couche de catalyseur de cathode comprend un matériau catalyseur de platine sur carbone disposé dans un ionomère et la couche de catalyseur de cathode a un rapport pondéral ionomère/carbone compris entre 0,6 et 1,0.

13. Procédé de fabrication d'une membrane revêtue de catalyseur destiné à un électrolyseur d'eau selon l'une quelconque revendication précédente, le procédé comprenant :
la formation d'une membrane ionomère ayant une première surface et une seconde surface, la membrane ionomère comprenant un matériau de renfort ;
la formation d'une couche de catalyseur d'anode sur la première surface de la membrane ionomère ; et
la formation d'une couche de catalyseur de cathode sur la seconde surface de la membrane ionomère,
dans lequel le matériau de renfort est réparti asymétriquement par rapport à un plan central de la membrane ionomère de telle sorte que sa localisation moyenne est plus près de la couche de catalyseur d'anode que de la couche de catalyseur de cathode.

14. Procédé selon la revendication 13, dans lequel la membrane ionomère est formée par le dépôt d'une dispersion d'ionomère dans un véhicule liquide sur une couche de support solide et le séchage au moins partiel pour former une première couche d'ionomère ;
le dépôt d'une dispersion d'ionomère dans un véhicule liquide sur la première couche d'ionomère et le séchage au moins partiel pour former une seconde couche d'ionomère par-dessus la première couche d'ionomère ; et
facultativement le dépôt et le séchage séquentiels d'une ou plusieurs couches supplémentaires d'ionomère par-dessus les première et seconde couches d'ionomère pour construire la structure de membrane ionomère sur la couche de support solide,
dans lequel au moins l'une des couches d'ionomère comprend le matériau de renfort.

15. Électrolyseur d'eau comprenant une membrane revêtue de catalyseur selon l'une quelconque des revendications 1 à 12.
